Europäisches Patentamt

**European Patent Office**

Office européen des brevets

(11) Numéro de publication : **0 061 399**
**B1**

(12) **FASCICULE DE BREVET EUROPÉEN**

(45) Date de publication du fascicule du brevet :
28.05.86

(21) Numéro de dépôt : **82400498.0**

(22) Date de dépôt : **18.03.82**

(51) Int. Cl.⁴ : **E 04 H 5/12**

---

(54) Cheminée, notamment tour de réfrigérant atmosphérique.

---

(30) Priorité : **20.03.81 FR 8105641**

(43) Date de publication de la demande :
**29.09.82 Bulletin 82/39**

(45) Mention de la délivrance du brevet :
**28.05.86 Bulletin 86/22**

(84) Etats contractants désignés :
**BE CH DE GB IT LI**

(56) Documents cités :
**DE-A- 3 008 020**
**DE-B- 1 113 080**
**FR-A- 969 120**
**FR-A- 2 352 138**
**FR-A- 2 437 597**

(73) Titulaire : **ELECTRICITE DE FRANCE Service National**
**2, rue Louis Murat**
**F-75008 Paris (FR)**

(72) Inventeur : **Bordet, René**
**30 rue Jean Bart**
**F-92400 Courbevoie (FR)**
Inventeur : **Grovalet, Yves**
**49, Rue de la Résistance**
**F-92370 Chaville (FR)**
Inventeur : **Caudron, Lionel**
**7 Hameau St Fiacre**
**F-78290 Croissy sur Seine (FR)**
Inventeur : **Diver, Maurice**
**15 rue d'Auvergne**
**F-78690 Les Essarts le Roi (FR)**

(74) Mandataire : **Martin, Jean-Jacques et al**
**Cabinet REGIMBEAU 26, Avenue Kléber**
**F-75116 Paris (FR)**

## Description

La présente invention concerne une cheminée, et notamment, mais non exclusivement, une tour à usage de réfrigérant atmosphérique.

Dans leur mode de réalisation le plus répandu, de telles cheminées comportent un voile en béton armé à double courbure, généralement en forme d'hyperboloïde de révolution autour d'un axe vertical, avec à leur partie inférieure une ouverture autorisant l'entrée d'air dans le but d'assurer un tirage à l'intérieur de la cheminée ; à cet effet, le voile est interrompu à distance du sol et prolongé jusqu'aux fondations, à l'intérieur de celui-ci, par des poteaux inclinés selon les méridiennes, pouvant être également inclinés dans le plan tangent à l'hyperboloïde à cet endroit, et définissant une structure portante ou assise en treillis à claire-voie ; au plan mécanique, ces poteaux définissent avec le voile et les fondations de la tour une structure unique, parfaitement solidaire.

L'augmentation de la taille de tels ouvrages conduit à renforcer leur structure portante, alors que des impératifs fonctionnels, liés à une recherche de réduction des pertes de charge que subit l'air à son entrée, conduisent à réduire l'obstacle que les poteaux opposent à l'entrée de l'air, par réduction de leur maître couple global et réduction des turbulences qu'ils tendent à provoquer dans l'air entrant.

Concilier ces impératifs est difficile, et conduit à un ensemble approchant les limites raisonnables de sécurité et de coût.

Le but de la présente invention est de proposer une structure de cheminée remédiant à ces inconvénients.

A cet effet, la présente invention propose de désolidariser la cheminée proprement dite, essentiellement constituée par le voile en béton armé, et la structure portante ou assise, et de rigidifier la partie inférieure du voile par un anneau périphérique rigide qui reprend les efforts de cisaillement dans le voile, équilibre les poussées horizontales dans celui-ci, et transmet l'effort tranchant à l'assise, sur laquelle le voile repose par cet anneau, le cas échéant par l'intermédiaire d'appuis notamment élastiques.

Le fait de munir d'un anneau périphérique inférieur le voile à double courbure d'une cheminée de réfrigérant atmosphérique est connu en lui-même du fait de DE-A-3 008 020.

En effet, ce document décrit une cheminée de réfrigérant atmosphérique comportant un voile à double courbure s'appuyant sur un soubassement qui présente la forme d'une poutre annulaire disposée sur des plaques supports de paires de piliers.

Cependant, le soubassement annulaire du voile de la cheminée de réfrigérant décrite par DE-A-3 008 020 n'est ni solidaire du voile, ni dissocié, des piliers comme le préconise la présente invention.

Il s'agit là d'une différence fondamentale, liée à une autre différence fondamentale que constitue la différence de nature du voile ; le voile est métallique dans le cas de la structure proposée par DE-A-3 008 020, et non en béton armé comme dans le cas de la présente invention, et DE-A-3 008 020 propose en fait une solution à un problème bien spécifique des parois métalliques en tôle mince, qui réside en ce que de telles parois ne peuvent résister aux efforts locaux apparaissant notamment dans les voiles de réfrigérant atmosphérique, et nécessitent de ce fait une structure porteuse ; précisément, ce document suggère la simplification de cette structure porteuse, limitée dans ce cas à des cerces, par utilisation d'une paroi ondulée.

Au contraire, les parois en béton armé sont susceptibles de résister aux efforts locaux, et la présente invention ne propose pas la consolidation d'un voile en béton armé de façon générale, mais propose une prise en charge particulière des efforts à la partie inférieure de ce voile, en dissociant celui-ci de l'assise ; naturellement, les cheminées de réfrigérant atmosphérique dont le voile est en béton armé sont connues depuis longtemps mais on a jusqu'à présent préconisé une solidarité du voile et de la structure portante ou assise, comme c'est par exemple le cas dans FR-A-2 353 138 qui préconise un mode de coopération mutuelle excluant toute dissociation.

Les avantages d'une telle dissociation du voile et de l'assise sont nombreux, certains se rencontrant de façon générale chaque fois que, dans un ouvrage, on dissocie la structure portante de la structure portée, et d'autres étant tout à fait spécifiques au cas des cheminées et notamment des tours de réfrigérant atmosphérique.

De façon connue en soi, cette dissociation permet, par le jeu d'appuis interposés entre la structure portée, comportant le voile, et la structure portante, qui peut être constituée de piles essentiellement verticales et solidaires des fondations de la tour, ou, en variante, d'un socle formant soubassement, de compenser les tassements différentiels par un procédé couramment utilisé dans le cas des ponts, dont les travées reposent elles aussi sur des piles ; il s'agit par exemple de prévoir la possibilité d'introduire des vérins entre la structure portante et la structure portée pour y introduire ou y ajouter des cales d'appui, d'autres procédés de compensation utilisés dans les travaux publics pouvant naturellement être également choisis.

Il est en outre possible d'introduire des appuis anti-sismiques, pouvant filtrer le spectre d'excitation sismique, entre la structure portée et la structure portante.

Un autre avantage consiste dans la possibilité de calculer le voile en s'affranchissant des caractéristiques du sol, ce qui conduit à un certain degré de standardisation des cheminées.

Plus généralement, l'ouvrage réalisé conformément à l'invention est constitué de deux structu-

res pures, à savoir la cheminée proprement dite essentiellement constituée par le voile et la structure portante, dont le comportement est connu et dont le calcul peut être conduit avec précision.

Cet avantage est particulièrement intéressant dans le cas des cheminées notamment à usage de réfrigérant atmosphérique à voile béton armé qui, dans leur conception actuellement connue, sous la forme d'une structure unique voile-poteaux-sol, ne se prêtent à aucune méthode de calcul, empirique ou théorique, susceptible de prédire avec suffisamment de précision le degré de sécurité devant le risque d'instabilité de forme ou cloquage, l'imprécision s'accroissant au fur et à mesure qu'augmente le rapport entre la hauteur des poteaux et celle de la cheminée.

Lorsqu'on adopte la structure préconisée selon l'invention, dans un premier mode de réalisation les piles constituent avantageusement la structure porteuse et peuvent être conçues et calculées comme des consoles, soumises à leur extrémité supérieure aux efforts provenant du voile et encastrées dans leurs fondations.

En variante, les piles sont solidaires du voile avec lequel elles constituent la structure portée, et reposent sur une assise formant structure portante, cette assise étant alors, par exemple, constituée d'un socle formant soubassement, et solidaire des fondations de la tour.

Il en résulte que, dans l'un ou l'autre mode de réalisation, la distance entre les piles peut être déterminée directement en fonction d'un calcul d'optimisation de l'aérodynamisme de l'entrée d'air, consistant essentiellement à minimiser les pertes de charge.

Ainsi, le remplacement de la dentelle connue de poteaux inclinés prolongeant le voile vers la semelle annulaire de fondation, lesquels poteaux ne peuvent être conçus et calculés comme des consoles puisqu'ils forment une structure unique avec leurs fondations et avec le voile, par une structure conformément à l'invention, comportant avantageusement des piles verticales qui peuvent être plus espacées, accroît le rendement thermique par augmentation de la surface des entrées d'air et la diminution de la turbulence.

Selon une démarche contraire, on peut en adoptant la structure selon l'invention accepter un rendement thermique égal à celui des réfrigérants traditionnels et réduire la hauteur totale de la cheminée en remplaçant les poteaux classiques par une structure portante dissociée de son assise.

La cheminée selon l'invention, notamment à usage de tour de réfrigérant atmosphérique, du type comportant un voile à double courbure, en béton armé, et une structure portante ou assise pour le voile, se caractérise par conséquent en ce que le voile est dissocié de l'assise, et présente à sa partie inférieure un anneau périphérique rigide par l'intermédiaire duquel il repose sur l'assise, ledit anneau reprenant les efforts de cisaillement dans le voile, équilibrant les poussées horizontales dans celui-ci, et transmettant l'effort tranchant à l'assise.

D'autres caractéristiques et avantages de l'invention ressortiront de la description ci-dessous, relative à deux modes de réalisation non limitatifs, et des dessins annexés qui font partie intégrante de cette description.

La figure 1 montre, dans un premier mode de réalisation, une élévation latérale d'une tour de réfrigérant atmosphérique réalisée conformément à l'invention, selon deux variantes respectivement dans sa partie gauche et dans sa partie droite.

La figure 2 montre une vue de l'assise, en coupe par le plan II-II de la figure 1.

Les figures 3 et 4 montrent des vues en coupe par le même plan II-II à une échelle supérieure à celle de la figure 2, d'une pile du type utilisé respectivement pour la variante de la partie gauche et pour la variante de la partie droite des figures 1 et 2.

La figure 5 montre une vue partielle d'une section de la tour, par un plan incluant l'axe de celle-ci, au droit d'un appui selon la variante illustrée dans la moitié gauche des figures 1 et 2.

La figure 6 montre une vue partielle d'une section de la tour par un plan vertical passant entre deux appuis, dans une variante du premier mode de réalisation, employant le procédé de construction dit de « poutre-échelle ».

La figure 7 montre une vue partielle d'une section de la tour par un plan vertical passant entre deux appuis, dans un deuxième mode de réalisation où les piles sont partie intégrante de la structure portée.

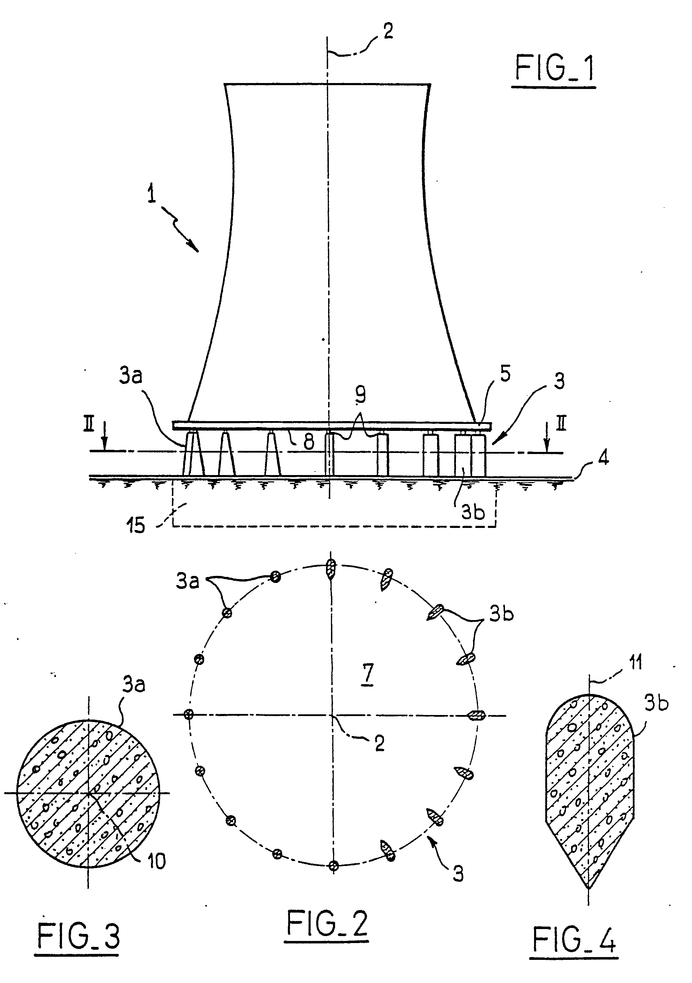

On se référera en premier lieu au mode de réalisation illustré aux figures 1 à 5.

On a désigné par 1 un voile en béton armé, à double courbure et par exemple en forme d'hyperboloïde de révolution autour d'un axe vertical 2, ce voile définissant la cheminée proprement dite ; on a par ailleurs désigné par 3 la structure portante ou assise du voile, cette assise 3 se prolongeant à l'intérieur du sol 4 par des fondations 15.

Conformément à l'invention, le voile 1 est dissocié de l'assise 3, c'est-à-dire apte à résister de façon autonome, indépendamment de toute interaction avec l'assise 3, aux divers efforts et contraintes auxquels il peut être soumis notamment du fait de l'action du vent ; en particulier, le voile 1 est apte à s'opposer du fait de son propre poids au couple de renversement qui lui est imprimé par un vent maximal théorique ; il est calculé indépendamment de l'assise 3 ; si le poids propre est insuffisant, on peut à titre de sécurité s'opposer au couple de renversement par l'utilisation de tirants indépendants de l'assise, associant le poids des piles et des fondations et même celui du sol à celui du voile, ces tirants étant sollicités uniquement en traction et n'intervenant que pour des vents très importants (variante non illustrée).

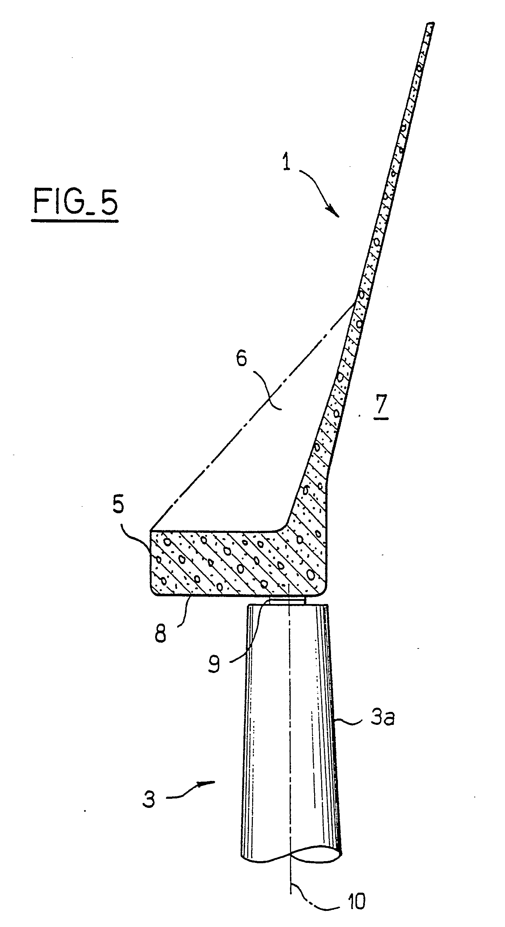

La partie inférieure du voile 1 se présente sous la forme d'un anneau périphérique rigide 5, d'axe 2, par l'intermédiaire duquel le voile 1 repose sur l'assise 3 ; cet anneau 5, qui reprend les efforts de cisaillement dans le voile, équilibre les poussées horizontales dans celui-ci, et rigidifie de ce fait le bord inférieur du voile 1, peut présenter toute forme compatible avec les exigences aérodynamiques ; il peut former une saillie vers l'extérieur du voile 1, comme dans l'exemple illustré figure 5, où il peut, le cas échéant, être relié vers le haut au reste du voile 1 par des goussets tels que 6 ; il peut également pénétrer partiellement à l'intérieur 7 de la cheminée délimité par le voile 1, auquel il peut également être relié par des goussets de renfort.

Le voile 1 repose sur son assise, par l'anneau 5 et notamment par la face inférieure 8 de celui-ci, sensiblement plane et orientée transversalement par rapport à l'axe 2, par l'intermédiaire d'appuis 9 qui peuvent être élastiques (par exemple en élastomère) et sont susceptibles de transmettre les efforts verticaux et horizontaux en autorisant, par distorsion, la dilatation de l'ouvrage sous l'action de la température ; dans certains cas, on peut également prévoir l'utilisation d'appuis fixes sans distorsion, ou tout appui d'autre type.

Dans le mode de réalisation illustré aux figures 1 à 5, du fait de sa dissociation du voile 1 au niveau des appuis 9, l'assise 3 de la tour peut être constituée par des piles, respectivement 3a dans la partie gauche des figures 1 et 2, à la figure 3 et à la figure 5, ou 3b dans la partie droite des figures 1 et 2 et à la figure 4, conçues et calculées comme des consoles, soumises à leur extrémité supérieure aux efforts provenant du voile via l'anneau 5, et notamment à l'effort tranchant, et encastrées dans leurs fondations 15.

Dans la partie gauche des figures 1 et 2, et aux figures 3 et 5, chaque pile 3a présente une forme tronconique de révolution autour d'un axe vertical 10 qui lui est propre ; dans la partie droite des figures 1 et 2 et à la figure 4, chaque pile 3b présente la forme d'un mur vertical, présentant un plan moyen vertical propre 11 incluant l'axe 2 ; en coupe par un plan horizontal quelconque, chacun des murs 3b présente de préférence une forme aérodynamique, s'inspirant dans l'exemple illustré de la forme dite « en goutte d'eau » avec symétrie par rapport au plan radial propre 11 ; d'autres formes pourraient naturellement être adoptées, notamment lorsque la cheminée doit être construite en un lieu présentant des vents importants.

Les fondations 15 de l'assise 3 peuvent être constituées comme dans les cheminées de type traditionnel par une semelle annulaire unique, commune à l'ensemble des piles telles que 3a ou 3b ; cependant, du fait de la dissociation entre le voile 1 et son assise 3 lorsque l'on met en œuvre l'invention, et de la grande facilité qui en résulte pour compenser des tassements différentiels éventuels par remplacement ou modification de l'épaisseur des appuis tels que 9, on peut également prévoir des fondations isolées pour chaque pile telle que 3a ou 3b, ou pour des groupes de piles distincts, ce qui facilite le calcul des fondations et simplifie leur réalisation.

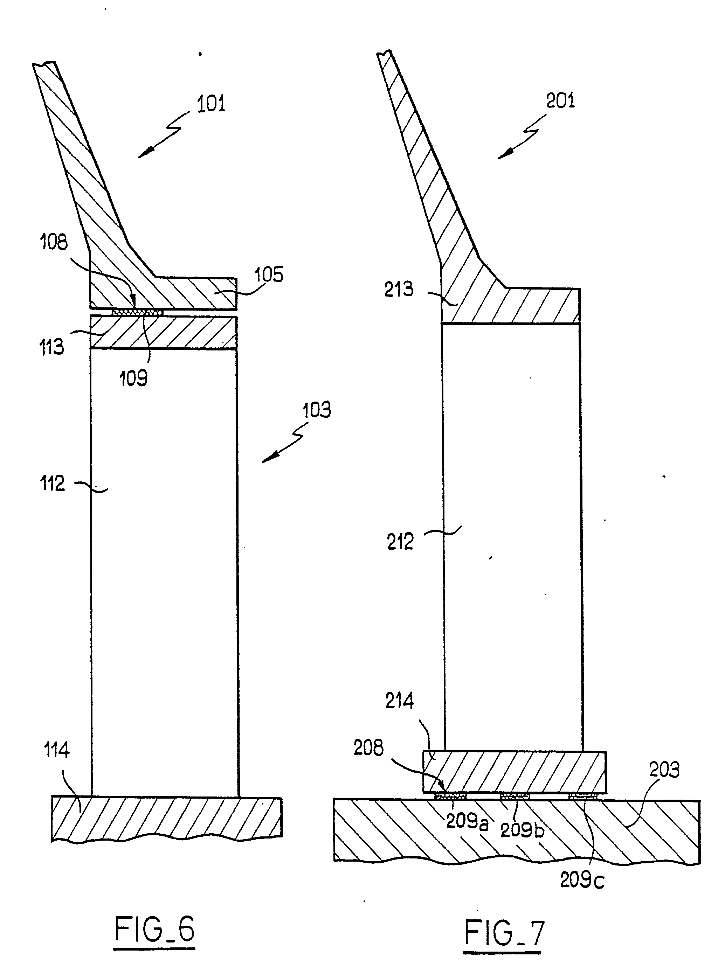

Une variante de ce mode de réalisation, illustrée par la figure 6, consiste à employer, pour réaliser l'assise 103, la disposition dite en « poutre-échelle » où chacune des piles 112 est reliée aux autres par des entretoises horizontales 113 et 114, circulaires, en forme de couronne. L'entretoise supérieure 113 relie toutes les parties supérieures des piles ; l'entretoise inférieure 114, qui peut être, dans ce mode de réalisation, solidaire des fondations de la tour, relie les bases de toutes les piles. L'entretoise supérieure 113 sert en outre de support au voile 101, de même conception que le voile 1 précédemment décrit, dont l'anneau périphérique inférieur rigide 105, en tous points comparable à l'anneau 5 de rigidification du voile 1, repose sur elle par sa face inférieure 108, par l'intermédiaire d'appuis élastiques 109.

Dans un deuxième mode de réalisation, représenté à la figure 7, on a également employé la construction en forme de « poutre-échelle », où les piles 212 sont reliées par deux couronnes circulaires 213 et 214 formant entretoises. Mais ici les piles 212, solidaires du voile 201, font partie intégrante de la structure portée et le rôle de l'anneau périphérique rigide 5 ou 105 est joué par l'entretoise inférieure 214, qui repose par l'intermédiaire d'appuis élastiques 209a, 209b, 209c alors placés à la base des piles, sur l'assise 203 alors constituée par les fondations elles-mêmes. De cette manière est réalisée la dissociation entre la structure portée, comportant le voile 201 et les piles 212, et la structure portante ou assise 203, et les avantages précités se retrouvent de la même façon.

Bien entendu, dans ce dernier mode de réalisation, il est possible de donner aux piles les formes qui ont été décrites en variante du premier mode de réalisation, et notamment celles de tronc de cône, de mur radial vertical, ou la forme aérodynamique précitée.

Naturellement, la tour à usage de réfrigérant atmosphérique illustrée ne constitue qu'un exemple non limitatif de mise en œuvre de l'invention, qui pourrait s'appliquer à d'autres types de cheminée présentant une assise à claire-voie.

## Revendications

1. Cheminée, notamment tour de réfrigérant atmosphérique, du type comportant un voile (1, 101, 201) à double courbure, en béton armé, et une structure portante ou assise (3, 103, 203) pour le voile (1, 101, 201), caractérisée en ce que le voile (1, 101, 201) est dissocié de l'assise (3, 103, 203), et rigidifié à sa partie inférieure par un anneau périphérique rigide (5, 105, 214), par l'intermédiaire duquel le voile (1, 101, 201) repose sur l'assise (3, 103, 203), ledit anneau reprenant les efforts de cisaillement dans le voile, équilibrant les poussées horizontales dans celui-ci, et transmettant l'effort tranchant à l'assise.

2. Cheminée selon la revendication 1, caractérisée en ce que ledit anneau (5, 105, 214) repose sur l'assise (3, 103, 203) par l'intermédiaire d'appuis (9, 109, 209) susceptibles de transmettre les efforts verticaux et horizontaux en autorisant la dilatation thermique de l'ouvrage.

3. Cheminée selon la revendication 2, caractérisée en ce que les appuis (9, 109, 209) sont élastiques.

4. Cheminée selon l'une quelconque des revendications 1 à 3, caractérisée en ce que l'assise (3, 103) est constituée de piles (3a, 3b, 112) essentiellement verticales.

5. Cheminée selon l'une quelconque des revendications 1 à 3, caractérisée en ce que l'assise (203) est constituée par les fondations de la tour.

6. Cheminée selon la revendication 4, caractérisée en ce que les piles (3a) présentent une forme tronconique de révolution autour d'un axe vertical (10).

7. Cheminée selon la revendication 4, la tour présentant un axe vertical (2), caractérisée en ce que les piles (3b) présentent la forme de murs radiaux par rapport à cet axe (2).

8. Cheminée selon la revendication 7, caractérisée en ce que les piles (3b) présentent une forme aérodynamique.

9. Cheminée selon la revendication 4, caractérisée en ce que les fondations (15) sont communes à l'ensemble des piles (3a, 3b).

## Claims

1. A stack, particularly an atmospheric cooling tower, of the type comprising a shell with double curvature, made of reinforced concrete, and a bearing structure or seating (3, 103, 203) for the shell, characterized in that the shell (1, 101, 201) is dissociated from the seating (3, 103, 203) and rigidified at its lower part by a rigid peripheral ring (5, 105, 214) via which the shell (1, 101, 201) rests on the seating (3, 103, 203), said ring taking up the shearing stress in the shell, balancing the horizontal thrusts therein and transmitting the shearing forces to the seating.

2. The stack of claim 1, characterized in that said ring (5, 105, 214) rests on the seating (3, 103, 203) via supports (9, 109, 209) capable of transmitting the vertical and horizontal efforts, allowing thermal dilation of the structure.

3. The stack of claim 2, characterized in that the supports (9, 109, 209) are elastic.

4. The stack of any one of claims 1 to 3, characterized in that the seating (3, 103) is constituted by essentially vertical piers (3a, 3b, 112).

5. The stack of any one of claims 1 to 3, characterized in that the seating (203) is constituted by the foundations of the tower.

6. The stack of claim 4, characterized in that the piers (3a) present a truncated shape of revolution about a vertical axis (10).

7. The stack of claim 4, the tower presenting a vertical axis (2), characterized in that the piers (3b) are in the form of radial walls with respect to this axis (2).

8. The stack of claim 7, characterized in that the piers (3b) have an aerodynamic form.

9. The stack of claim 4, characterized in that the foundations (15) are common to all the piers (3a, 3b).

## Patentansprüche

1. Kamin, insbesondere atmosphärischer Kühlturm, der Bauart mit einer Schale (1, 101, 201) mit doppelter Krümmung aus armiertem Beton, und einer Auflager- oder Sitzstruktur (3, 103, 203) für die Schale (1, 101, 201), dadurch gekennzeichnet, daß die Schale (1, 101, 201) von der Sitzstruktur (3, 103, 203) getrennt und in ihrem Unterteil durch einen starren Umfangsring (5, 105, 214) versteift ist, mittels welchem die Schale (1, 101, 201) auf der Sitzstruktur (3, 103, 203) aufsitzt, wobei der Ring die Schubbeanspruchungen in der Schale aufnimmt, indem er den Horizontalschub in derselben ausgleicht und die Scherbeanspruchung auf die Sitzstruktur überträgt.

2. Kamin nach Anspruch 1, dadurch gekennzeichnet, daß der besagte Ring (5, 105, 214) auf der Stizstruktur (3, 103, 203) über Abstützungen (9, 109, 209) gelagert ist, welche die Vertikal- und Horizontalbeanspruchungen übertragen können und dabei thermische Wärmeausdehnung des Bauwerkes zulassen.

3. Kamin nach Anspruch 2, dadurch gekennzeichnet, daß die Abstützungen (9, 109, 209) elastisch ausgebildet sind.

4. Kamin nach einem der Ansprüche 1 bis 3, dadurch gekennzeichnet, daß die Sitzstruktur (3, 103) von im wesentlichen vertikalen Pfeilern (3a, 3b, 112) gebildet ist.

5. Kamin nach einem der Ansprüche 1 bis 3, dadurch gekennzeichnet, daß die Sitzstruktur (203) von den Fundamenten des Turms gebildet ist.

6. Kamin nach Anspruch 4, dadurch gekennzeichnet, daß die Pfeiler (3a) von kegelstumpfförmigen Rotationskörpern mit vertikaler Achse (10) gebildet sind.

7. Kamin nach Anspruch 4 mit vertikaler Achse (2) des Turms, dadurch gekennzeichnet, daß die Pfeiler (3b) die Form von bezüglich dieser Achse (2) radial verlaufenden Mauern haben.

8. Kamin nach Anspruch 7, dadurch gekennzeichnet, daß die Pfeiler (3b) eine aerodynamische Form haben.

9. Kamin nach Anspruch 4, dadurch gekennzeichnet, daß die Fundamente (15) für alle Pfeiler (3a, 3b) gemeinsam vorgesehen sind.

0 061 399

FIG_1

FIG_3

FIG_2

FIG_4

1

FIG.5

FIG_6

FIG_7